# FASCICULE DE BREVET EUROPEEN

(11) **EP 3 724 039 B1**
(45) Date de publication et mention de la délivrance du brevet: **23.11.2022**
(21) Numéro de dépôt: 18816050.1
(22) Date de dépôt: 10.12.2018
(51) Int. Cl.: B60R 21/02

(54) **CLOISON DE VÉHICULE AUTOMOBILE**
TRENNWAND FÜR EIN KRAFTFAHRZEUG
PARTITION FOR A MOTOR VEHICLE

(30) Priorité: 11.12.2017 FR 1761938
(43) Date de publication de la demande: 21.10.2020
(73) Titulaire: Renault s.a.s, 92100 Boulogne Billancourt (FR)
(72) Inventeur: ANFRAY, Philippe, 78790 Saint Martin des Champs (FR); POULLARD, Christophe, 78640 NEAUPHLE LE VIEUX (FR)
(74) Mandataire: Renault Group
(86) Numéro de dépôt international: PCT/EP2018/084200
(87) Numéro de publication internationale: WO 2019/115461

(56) Documents cités:
- DE-A1- 19 751 671
- JP-A- H11 165 659

## Description

L'invention porte sur une cloison de véhicule automobile. L'invention porte aussi sur un agencement intérieur comprenant une telle cloison. L'invention porte encore sur une caisse comprenant une telle cloison. L'invention porte enfin sur un véhicule automobile comprenant un tel agencement intérieur, une telle caisse ou une telle cloison.

Un véhicule automobile, par exemple de type utilitaire, est doté d'un espace intérieur arrière, éventuellement destiné à l'entreposage de marchandises et/ou de matériel, et d'un espace intérieur avant ou espace cabine. L'espace avant comprend au moins un siège conducteur et est séparé généralement de l'espace arrière par le biais d'une cloison, en particulier pour des raisons de sécurité. En effet il convient d'éviter que des marchandises et/ou du matériel entreposés dans l'espace arrière ne puissent venir blesser le conducteur et les éventuels passagers présents dans l'espace cabine, en particulier en cas de freinage d'urgence et/ou de collision. JP H11 165659A décrit un tel agencement.

De plus, un tel véhicule automobile peut être proposé dans une version à trois places avant dans l'espace cabine. Seulement, dans une version à trois places avant, une troisième ceinture de sécurité doit être implantée pour le passager central. Il est difficile d'ajouter une troisième ceinture de sécurité sans augmenter de manière conséquente les coûts.

Le but de l'invention est de fournir une cloison remédiant aux inconvénients ci-dessus. En particulier, l'invention permet d'obtenir une cloison économique à fabriquer et simple à installer.

Pour atteindre cet objectif, l'invention porte sur une cloison pour véhicule automobile destinée à séparer un espace arrière d'un espace avant d'un véhicule automobile, les espaces arrière et avant s'étendent verticalement depuis un plancher jusqu'à un pavillon et transversalement depuis une paroi latérale intérieure droite jusqu'à une paroi latérale intérieure gauche, la cloison comprenant :
- une partie droite et une partie gauche étant aptes à s'étendre transversalement depuis un plan vertical et longitudinal d'un véhicule automobile, respectivement jusqu'à une paroi latérale intérieure droite et jusqu'à une paroi latérale intérieure gauche, les parties droite et gauche étant de plus aptes à s'étendre verticalement depuis un plancher jusqu'à un pavillon d'un véhicule automobile,
- un renfort fixé aux parties droite et gauche au niveau de leur jonction au niveau du plan vertical et longitudinal, le renfort s'étendant sensiblement verticalement depuis un plancher jusqu'à un pavillon.

La cloison peut comprendre un renvoi de ceinture de sécurité fixé sur le renfort.

La partie droite et/ou la partie gauche peuvent être en matériau plastique.

Le renfort peut être en acier et/ou tubulaire, notamment tubulaire de section circulaire, carrée, rectangulaire ou ellipsoïdale.

La cloison peut présenter une forme en deux plans inclinés entre eux au niveau d'un axe sensiblement horizontal et transversal, notamment deux plans inclinés d'un angle compris entre 135 degrés et 180 degrés s'étendant en direction de l'avant.

La cloison peut comprendre une platine supérieure destinée à la fixation du renfort au niveau d'un pavillon, notamment au niveau d'une traverse d'un pavillon, et/ou une platine inférieure destinée à la fixation du renfort au niveau d'un plancher.

La cloison peut comprendre un support d'enrouleur de ceinture de sécurité fixé sur la platine inférieure.

L'invention porte encore sur un agencement intérieur pour véhicule automobile comprenant un espace arrière et un espace avant, les espaces arrière et avant s'étendant transversalement depuis une paroi latérale intérieure droite jusqu'à une paroi latérale intérieure gauche et s'étendant verticalement depuis un plancher jusqu'à un pavillon, l'agencement intérieur comprenant une cloison telle que définie précédemment séparant l'espace arrière de l'espace avant.

L'invention porte encore sur une caisse de véhicule automobile comprenant une cloison telle que définie précédemment.

Selon un mode de réalisation, la caisse peut comprendre un support d'enrouleur de ceinture de sécurité fixé sur la caisse, notamment au niveau d'un plancher.

L'invention porte encore sur un véhicule automobile, notamment un véhicule automobile utilitaire, comprenant une caisse telle que définie précédemment et/ou un agencement intérieur tel que défini précédemment et/ou une cloison telle que définie précédemment.

Les figures annexées représentent, à titre d'exemple, un mode de réalisation de l'invention.
La figure 1 représente une vue schématique de côté d'un véhicule automobile selon un mode de réalisation de l'invention.
La figure 2 représente une vue en perspective d'une caisse de véhicule automobile selon un mode de réalisation de l'invention, une cabine étant tronquée selon un plan vertical et transversal derrière les places avant.
La figure 3 représente une vue de face de la caisse selon le mode de réalisation de l'invention, la cabine étant tronquée selon un plan vertical et transversal derrière les places avant.
La figure 4 représente une section partielle, selon un plan longitudinal et transversal, d'une cloison selon un mode de réalisation de l'invention.
La figure 5 représente une section selon un plan vertical et longitudinal passant par un renfort de la cloison selon le mode de réalisation de l'invention.
La figure 6 représente une vue en perspective d'un détail de la cloison selon le mode de réalisation de l'invention.
La figure 7 représente une vue en perspective d'une platine supérieure de fixation de la cloison selon le mode de réalisation de l'invention.

La direction selon laquelle un véhicule automobile se déplace habituellement en ligne droite est définie comme étant la direction longitudinale. Par convention, la direction perpendiculaire à la direction longitudinale, située dans un plan parallèle au sol, est nommée direction transversale. La troisième direction, perpendiculaire aux deux autres, est nommée direction verticale. Le sens « avant » correspond au sens dans lequel le véhicule automobile se déplace habituellement dans la direction longitudinale, et est opposé au sens « arrière ».

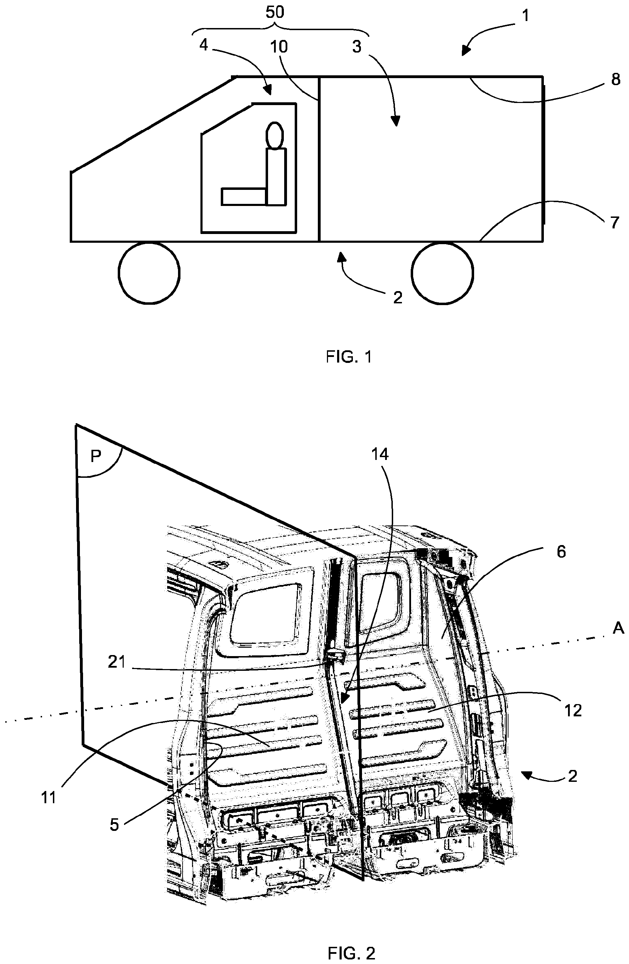

Comme illustré sur la figure 1, un véhicule automobile 1 selon un mode de réalisation comprend un agencement intérieur 50. Le véhicule automobile est de type d'un fourgon. Cet agencement intérieur 50 comprend un espace arrière 3 et un espace avant 4. Les espaces arrière et avant 3, 4 s'étendent de préférence verticalement depuis un plancher 7 jusqu'à un pavillon 8. Les espaces arrière et avant 3, 4 s'étendent également de préférence transversalement depuis une paroi latérale intérieure droite 5 jusqu'à une paroi latérale intérieure gauche 6, comme illustré sur la figure 2. L'agencement intérieur 50 comprend en outre une cloison 10 séparant l'espace arrière 3 de l'espace avant 4.

L'espace avant 4 comprend trois places assises et dispose d'une ceinture de sécurité pour chaque place. Une première ceinture est placée par exemple au niveau de la paroi latérale intérieure gauche 6, une deuxième ceinture de sécurité par exemple au niveau de la paroi latérale intérieure droite 5, alors qu'une troisième ceinture est placée entre les deux autres, au niveau d'un plan P, comme il sera expliqué par la suite.

Le véhicule automobile 1, qui peut être de type utilitaire, c'est-à-dire doté d'un espace arrière 3 voué au chargement et/ou entreposage de matériel et/ou marchandises, comprend une caisse 2. La caisse 2 selon un mode de réalisation comprend la cloison 10.

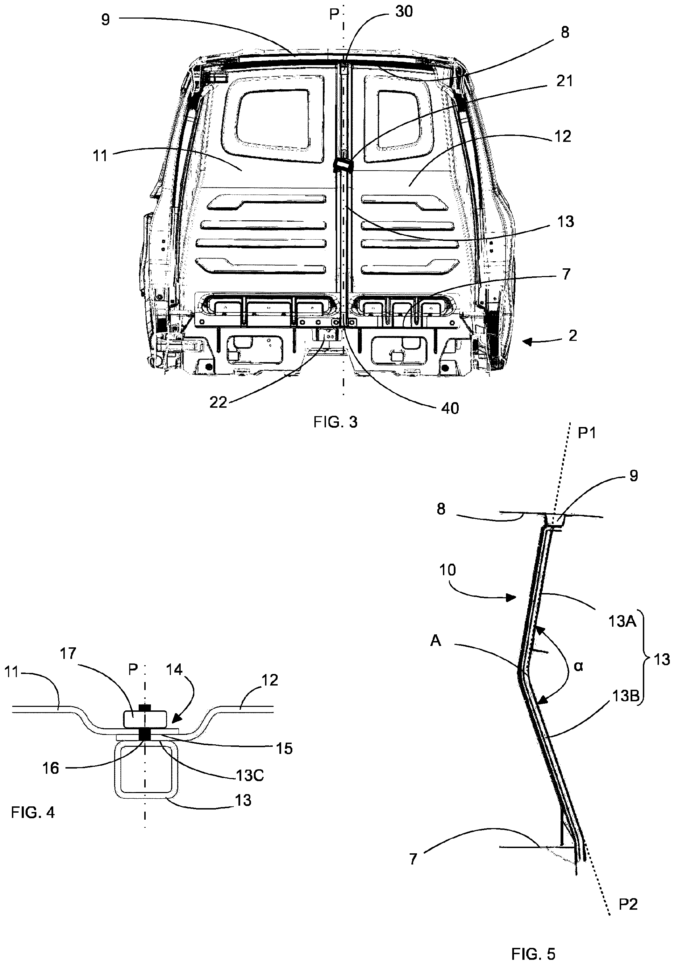

Comme illustré sur la figure 3, la caisse 2 peut comprendre également un support d'enrouleur 22 de la troisième ceinture de sécurité fixé sur la caisse 2, par exemple au niveau du plancher 7. Alternativement, le support d'enrouleur 22 peut être fixé sur la cloison 10 et/ou sur une platine inférieure 40 de fixation d'un renfort 13 de la cloison 10 sur la caisse 2. Alternativement, le support d'enrouleur 22 peut être fixé à la caisse 2 et à la platine inférieure 40 ou à la caisse 2 et à la cloison 10, par exemple au renfort 13 de la cloison 10.

Comme illustré notamment sur les figures 2, 3 et 4, la cloison 10 séparant l'espace arrière 3 de l'espace avant 4 comprend une partie droite 11 et une partie gauche 12. Comme illustré sur la figure 2, la partie droite 11 et la partie gauche 12 s'étendent transversalement depuis un plan P vertical et longitudinal, ou sensiblement depuis ce plan P, respectivement jusqu'à la paroi latérale intérieure droite 5 et jusqu'à la paroi latérale intérieure gauche 6, ou sensiblement jusqu'à ces parois 5, 6. En outre, les parties droite et gauche 11, 12 s'étendent verticalement depuis le plancher 7, ou sensiblement depuis le plancher 7, jusqu'au pavillon 8, ou sensiblement jusqu'au pavillon 8, du véhicule automobile 1.

Eventuellement, le plan P peut être le plan médian vertical et longitudinal du véhicule automobile 1. Cependant, en cas de poste de conduite à gauche et de cabine à trois places avant, la partie gauche 12 de la cloison 10 est de préférence moins large que la partie droite 11, et vice versa en cas de poste de conduite à droite.

De préférence, la partie droite 11 et/ou la partie gauche 12 de la cloison 10 sont en matière plastique injectée, chargée ou non, et/ou en plastique thermoformé ou encore en composite. En variante, la partie droite 11 et/ou la partie gauche 12 de la cloison 10 peuvent être en acier.

La cloison 10 comprend également un renfort 13 fixé aux parties droite et gauche 11, 12, de préférence au niveau de leur jonction 14 au niveau du plan P. Ainsi, le renfort assemblé 13 s'étend sensiblement verticalement depuis le plancher 7 jusqu'au pavillon 8.

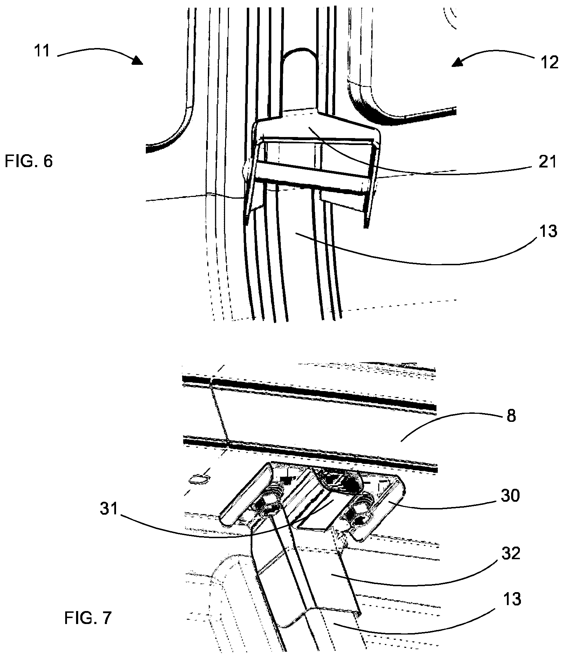

Comme illustré notamment sur la figure 6, la cloison 10 comprend un renvoi 21 de la troisième ceinture de sécurité fixé sur le renfort 13. La fixation entre le renfort 13 et le renvoi 21 peut être de type point(s) de soudure, vis ou encore rivet(s). Toutefois, la liaison entre le renfort 13 et le renvoi 21 peut avantageusement être une liaison pivot d'axe sensiblement horizontal et longitudinal de sorte à améliorer l'ergonomie de la troisième ceinture. De préférence, la liaison entre le renfort 13 et le renvoi 21 comprend également une liaison glissière d'axe vertical, ou sensiblement vertical, de manière à offrir des possibilités de réglage vertical à l'utilisateur.

De préférence, le renfort 13 est en acier. Le renfort 13 peut avoir une section tubulaire carrée, comme illustrée sur la figure 4. Il peut être de section tubulaire circulaire, rectangulaire ou encore ovale / ellipsoïdale. Alternativement, le renfort 13 peut être un profilé en U, en I ou encore en L, c'est-à-dire de type cornière.

Comme illustré en particulier sur les figures 2 et 5, la cloison 10 présente avantageusement une forme en deux plans P1, P2 inclinés entre eux au niveau d'un axe A sensiblement horizontal et transversal. Les deux plans P1, P2 sont inclinés entre eux par exemple d'un angle α compris entre 135 degrés et 180 degrés. Ainsi, le renfort 13 qui suit, ou suit sensiblement, le profil de la cloison 10 dans le plan P vertical et longitudinal, se présente en deux parties, une partie supérieure 13A et une partie inférieure 13B. La partie supérieure 13A est parallèle au plan P1 et la partie inférieure 13B est parallèle au plan P2. Les parties supérieure 13A et inférieure 13B s'étendent de préférence vers l'avant. En cas de valeur de l'angle α de 180 degrés ou sensiblement de 180 degrés, la cloison peut être plane ou sensiblement plane.

Comme illustré sur la figure 4, la jonction 14 entre la partie droite 11 de la cloison 10 et la partie gauche 12 de la cloison 10 comprend par exemple un chevauchement 15 de la partie droite 11 sur la partie gauche 12 ou vice versa. Le maintien en position de la partie droite 11 par rapport à la partie gauche 12 est par exemple assurée par un moyen comprenant un écrou 17 et un élément fileté 16, par exemple une vis traversant le renfort 13 ou encore une tige filetée ou goujon fixé au renfort 13 par exemple par soudage. Les parties droite et gauche 11, 12 sont alors coincées entre l'écrou 17 et le renfort 13, plus précisément contre une face arrière 13C du renfort 13. De préférence, plusieurs moyens de maintien en position 16, 17 sont placés le long du renfort 13.

Alternativement, la fixation de la partie droite 11 sur la partie gauche 12 est assurée par collage au niveau du chevauchement 15 et il peut y avoir un moyen de fixation entre le renfort 13 et les parties droite et gauche 11, 12.

Avantageusement, comme illustré en particulier sur la figure 7, le renfort 13 comprend une platine supérieure 30 destinée à sa fixation au niveau du pavillon 8, par exemple sur une traverse 9 du pavillon 8. Cette platine supérieure 30, par exemple de type plaque pliée en acier, est par exemple boulonnée au pavillon 8 ou à la traverse 9. La platine supérieure 30 comprend un logement ou cavité 31 s'étendant sensiblement horizontalement et longitudinalement de sorte à recevoir l'extrémité supérieure, de préférence cintrée, du renfort 13. En outre un renforcement 32 en forme de U ou chape vient renforcer le renfort 13 à proximité de la platine supérieure 30, en recouvrant l'extrémité supérieure du renfort 13.

Comme évoqué précédemment, la platine inférieure 40, par exemple de type plaque pliée en acier boulonnée sur le plancher 7, assure la fixation du renfort 13 au niveau du plancher 7.

Ainsi, en version trois places avant nécessitant une troisième ceinture de sécurité, la cloison 10 permet, via son renfort 13, de supporter le renvoi 21. Par conséquent, bien que la cloison 10 soit obtenue par l'association de la partie droite 11 et de la partie gauche 12 par exemple en plastique, le renfort 13 de la cloison 10 offre la rigidité requise pour supporter les efforts importants générés par la décélération du corps d'un passager sur la troisième ceinture de sécurité, par exemple lors d'un freinage d'urgence et/ou en cas de choc avant.

En remarque, un renfort destiné à la cloison d'un véhicule automobile ne disposant que de deux places avant, c'est-à-dire sans troisième ceinture avant, peut venir se fixer dans la platine supérieure 30 et la platine inférieure 40, même en cas de section de renfort différente du renfort 13, par exemple d'épaisseur plus faible. Il en résulte un avantage en termes de standardisation des pièces et, le cas échéant, une économie.

La solution est particulièrement adaptée à l'intégration d'une troisième ceinture dans un espace avant de véhicule automobile et présente les avantages suivants :
- la cloison 10 est légère du fait de la matière plastique des parties droite et gauche 11, 12,
- la cloison 10 est peu encombrante, le renfort 13 suivant le profil des parties droite et gauche 11, 12,
- la cadence de la chaîne de montage peut être augmentée, les platines inférieure 40 et supérieure 30 étant identiques dans une version deux places et dans une version trois places,
- le volume de l'espace cabine n'est pas impacté par l'ajout de la troisième ceinture, le renvoi 21 étant intégré au renfort 13 peu encombrant.

L'invention porte sur une cloison de séparation entre un espace arrière et un espace avant, en particulier un espace avant à trois places nécessitant une troisième ceinture. Elle porte aussi sur un agencement intérieur comprenant une telle cloison. Elle porte encore sur une caisse comprenant une telle cloison. Elle porte enfin sur un véhicule automobile comprenant une telle cloison et/ou une telle caisse et/ou un tel agencement intérieur.

## Revendications

1. Véhicule automobile (1), notamment véhicule automobile (1) utilitaire, comprenant une cloison (10) (1) destinée à séparer un espace arrière (3) d'un espace avant (4) d'un véhicule automobile (1), les espaces arrière et avant (3, 4) s'étendent verticalement depuis un plancher (7) jusqu'à un pavillon (8) et transversalement depuis une paroi latérale intérieure droite (5) jusqu'à une paroi latérale intérieure gauche (6), la cloison (10) comprenant :
- une partie droite (11) et une partie gauche (12) étant aptes à s'étendre transversalement depuis un plan (P) vertical et longitudinal d'un véhicule automobile (1), respectivement jusqu'à une paroi latérale intérieure droite (5) et jusqu'à une paroi latérale intérieure gauche (6), les parties droite et gauche (11, 12) étant de plus aptes à s'étendre verticalement depuis un plancher (7) jusqu'à un pavillon (8) d'un véhicule automobile (1),
- un renfort (13) fixé aux parties droite et gauche (11, 12) au niveau de leur jonction (14) à chevauchement au niveau du plan (P) vertical et longitudinal, le renfort (13) s'étendant sensiblement verticalement depuis un plancher (7) jusqu'à un pavillon (8).

2. Véhicule selon la revendication précédente, **caractérisé en ce que** la cloison comprend un renvoi (21) de ceinture de sécurité fixé sur le renfort (13).

3. Véhicule selon l'une des revendications précédentes, **caractérisé en ce que** la partie droite (11) et/ou la partie gauche (12) sont en matériau plastique.

4. Véhicule selon l'une des revendications précédentes, **caractérisé en ce que** le renfort (13) est en acier et/ou tubulaire, notamment tubulaire de section circulaire, carrée, rectangulaire ou ellipsoïdale.

5. Véhicule selon l'une des revendications précédentes, **caractérisé en ce que** la cloison présente une forme en deux plans (P1, P2) inclinés entre eux au niveau d'un axe (A) sensiblement horizontal et transversal, notamment deux plans (P1, P2) inclinés d'un angle (α) compris entre 135 degrés et 180 degrés s'étendant en direction de l'avant.

6. Véhicule selon l'une des revendications précédentes, **caractérisé en ce que** la cloison comprend une platine supérieure (30) destinée à la fixation du renfort (13) au niveau d'un pavillon (8), notamment au niveau d'une traverse (9) d'un pavillon (8), et/ou une platine inférieure (40) destinée à la fixation du renfort (13) au niveau d'un plancher (7).

7. Véhicule selon la revendication précédente, **caractérisé en ce que** la cloison comprend un support d'enrouleur (22) de ceinture de sécurité fixé sur la platine inférieure (40).

8. Véhicule selon l'une quelconque des revendications précédentes, comprenant un agencement intérieur (50)comprenant un espace arrière (3) et un espace avant (4), les espaces arrière et avant (3, 4) s'étendant transversalement depuis une paroi latérale intérieure droite (5) jusqu'à une paroi latérale intérieure gauche (6) et s'étendant verticalement depuis un plancher (7) jusqu'à un pavillon (8), **caractérisé en ce que** l'agencement intérieur (50) comprend une cloison (10) selon l'une des revendications précédentes séparant l'espace arrière (3) de l'espace avant (4).

## Patentansprüche

1. Kraftfahrzeug (1), insbesondere Nutzfahrzeug (1), welches eine Trennwand (10) (1) umfasst, die dazu bestimmt ist, einen hinteren Raum (3) von einem vorderen Raum (4) eines Kraftfahrzeugs (1) zu trennen, wobei der hintere und der vordere Raum (3, 4) sich vertikal von einem Boden (7) bis zu einem Dach (8) und sich in Querrichtung von einer rechten inneren Seitenwand (5) bis zu einer linken inneren Seitenwand (6) erstrecken, wobei die Trennwand (10) umfasst:
- einen rechten Teil (11) und einen linken Teil (12), die geeignet sind, sich von einer vertikalen und längs verlaufenden Ebene (P) eines Kraftfahrzeugs (1) aus in Querrichtung bis zu einer rechten inneren Seitenwand (5) bzw. bis zu einer linken inneren Seitenwand (6) zu erstrecken, wobei der rechte und der linke Teil (11, 12) außerdem geeignet sind, sich vertikal von einem Boden (7) bis zu einem Dach (8) eines Kraftfahrzeugs (1) zu erstrecken,
- eine Aussteifung (13), die am rechten und linken Teil (11, 12) an deren Verbindungsstelle (14) an der vertikalen und längs verlaufenden Ebene (P) überlappend befestigt ist, wobei sich die Aussteifung (13) im Wesentlichen vertikal von einem Boden (7) bis zu einem Dach (8) erstreckt.

2. Fahrzeug nach dem vorhergehenden Anspruch, **dadurch gekennzeichnet, dass** die Trennwand einen Umlenker (21) für einen Sicherheitsgurt umfasst, der an der Aussteifung (13) befestigt ist.

3. Fahrzeug nach einem der vorhergehenden Ansprüche, **dadurch gekennzeichnet, dass** der rechte Teil (11) und/oder der linke Teil (12) aus Kunststoff bestehen.

4. Fahrzeug nach einem der vorhergehenden Ansprüche, **dadurch gekennzeichnet, dass** die Aussteifung (13) aus Stahl besteht und/oder rohrförmig ist, insbesondere rohrförmig mit kreisförmigem, quadratischem, rechteckigem oder elliptischem Querschnitt.

5. Fahrzeug nach einem der vorhergehenden Ansprüche, **dadurch gekennzeichnet, dass** die Trennwand eine Form in zwei Ebenen (P1, P2) aufweist, die an einer im Wesentlichen horizontalen und quer verlaufenden Achse (A) zueinander geneigt sind, insbesondere zwei um einen Winkel (a) zwischen 135 Grad und 180 Grad geneigte Ebenen (P1, P2), die sich in Vorwärtsrichtung erstrecken.

6. Fahrzeug nach einem der vorhergehenden Ansprüche, **dadurch gekennzeichnet, dass** die Trennwand eine obere Platte (30) umfasst, die zur Befestigung der Aussteifung (13) an einem Dach (8), insbesondere an einem Querträger (9) eines Daches (8), bestimmt ist, und/oder eine untere Platte (40), die zur Befestigung der Aussteifung (13) an einem Boden (7) bestimmt ist.

7. Fahrzeug nach dem vorhergehenden Anspruch, **dadurch gekennzeichnet, dass** die Trennwand eine Halterung eines Sicherheitsgurtaufrollers (22) umfasst, die an der unteren Platte (40) befestigt ist.

8. Fahrzeug nach einem der vorhergehenden Ansprüche, welches eine innere Anordnung (50) umfasst, die einen hinteren Raum (3) und einen vorderen Raum (4) umfasst, wobei der hintere und der vordere Raum (3, 4) sich in Querrichtung von einer rechten inneren Seitenwand (5) bis zu einer linken inneren Seitenwand (6) erstrecken und sich vertikal von einem Boden (7) bis zu einem Dach (8) erstrecken, **dadurch gekennzeichnet, dass** die innere Anordnung (50) eine Trennwand (10) nach einem der vorhergehenden Ansprüche umfasst, die den hinteren Raum (3) von dem vorderen Raum (4) trennt.

## Claims

1. Motor vehicle (1), in particular a utility motor vehicle (1), comprising a partition (10) (1) intended to separate a rear space (3) from a forward space (4) of a motor vehicle (1), the rear and forward spaces (3, 4) extending vertically from a floor (7) to a roof (8) and transversely from a right-hand inner lateral wall (5) to a left-hand inner lateral wall (6), the partition (10) comprising:
- a right-hand part (11) and a left-hand part (12) that can extend transversely from a vertical and longitudinal plane (P) of a motor vehicle (1), respectively as far as a right-hand inner lateral wall (5) and as far as a left-hand inner lateral wall (6), the right-hand and left-hand parts (11, 12) also being able to extend vertically from a floor (7) to a roof (8) of a motor vehicle (1),
- a reinforcement (13) attached to the right-hand and left-hand parts (11, 12) at the point (14) at which they join with an overlap at the vertical and longitudinal plane (P), the reinforcement (13) extending essentially vertically from a floor (7) to a roof (8).

2. Vehicle according to the preceding claim, **characterized in that** the partition comprises a safety belt turning loop (21) attached to the reinforcement (13).

3. Vehicle according to either of the preceding claims, **characterized in that** the right-hand part (11) and/or the left-hand part (12) are made of plastic material.

4. Vehicle according to one of the preceding claims, **characterized in that** the reinforcement (13) is made of steel and/or is tubular, in particular tubular with a circular, square, rectangular or ellipsoidal cross section.

5. Vehicle according to one of the preceding claims, **characterized in that** the partition has a shape in two planes (P1, P2) that are inclined with respect to one another at an essentially horizontal and transverse axis (A), in particular two planes (P1, P2) inclined at an angle (α) of between 135 degrees and 180 degrees extending in the forward direction.

6. Vehicle according to one of the preceding claims, **characterized in that** the partition comprises an upper plate (30) intended for the attachment of the reinforcement (13) at a roof (8), in particular at a crossmember (9) of a roof (8), and/or a lower plate (40) intended for the attachment of the reinforcement (13) at a floor (7).

7. Vehicle according to the preceding claim, **characterized in that** the partition comprises a safety belt reel support (22) attached to the lower plate (40).

8. Vehicle according to one of the preceding claims, comprising an internal arrangement (50) comprising a rear space (3) and a forward space (4), the rear and forward spaces (3, 4) extending transversely from a right-hand inner lateral wall (5) to a left-hand inner lateral wall (6) and extending vertically from a floor (7) to a roof (8), **characterized in that** the internal arrangement (50) comprises a partition (10) according to one of the preceding claims separating the rear space (3) from the forward space (4).
